Europäisches Patentamt

European Patent Office

Office européen des brevets

(11) Veröffentlichungsnummer: **0 291 657 B1**

# (12) EUROPÄISCHE PATENTSCHRIFT

(45) Veröffentlichungstag der Patentschrift:
02.05.91 Patentblatt 91/18

(51) Int. Cl.$^5$: **B62D 43/10**

(21) Anmeldenummer: **88104148.7**

(22) Anmeldetag: **16.03.88**

(54) Halterung eines Reserverades an einer Wandung eines Kraftfahrzeugs.

Die Akte enthält technische Angaben, die nach dem Eingang der Anmeldung eingereicht wurden und die nicht in dieser Patentschrift enthalten sind.

(30) Priorität: **20.05.87 DE 3716866**

(43) Veröffentlichungstag der Anmeldung:
**23.11.88 Patentblatt 88/47**

(45) Bekanntmachung des Hinweises auf die Patenterteilung:
**02.05.91 Patentblatt 91/18**

(84) Benannte Vertragsstaaten:
**DE ES FR GB IT SE**

(56) Entgegenhaltungen:
**DE-A- 3 131 205**
**DE-C- 3 516 157**
**GB-A- 2 142 888**
**US-A- 4 423 900**

(73) Patentinhaber: **Bayerische Motoren Werke Aktiengesellschaft**
**Patentabteilung AJ-30 Postfach 40 02 40**
**Petuelring 130**
**W-8000 München 40 (DE)**

(72) Erfinder: **Eberlein, Ludwig**
**Am Lagberg 34**
**W-8737 Sulzthal (DE)**

## Beschreibung

Die Erfindung bezieht sich auf eine Halterung eines Reserverades der im Oberbegriff des Patentanspruchs 1 genannten und aus der GB-A-21 42 888 (Fig. 2) hervorgehenden Art.

In dieser Druckschrift ist eine muldenförmige Vertiefung in einem Kraftfahrzeug offenbart, von deren Boden ein Schraubenbolzen lotrecht absteht. Dieser durchsetzt die Durchgangsöffnung der Felge eines in die Vertiefung eingesetzten Reserverades. Ferner ist auf den freien Endabschnitt des Schraubenbolzens ein Schraubteil mit einer radial gerichteten Tragscheibe aufgeschraubt, die bei festgeschraubtem Schraubteil an der obenliegenden Stirnseite der Radscheibe anliegt und dadurch das Reserverad gegen den Boden der muldenförmigen Vertiefung preßt. Dabei liegt auf der freien Stirnseite der Tragscheibe ein nach oben offener topfförmiger Kunststoffbehälter auf, dessen freier Umfangsrand etwa auf Höhe der obenliegenden Felgenstirnseite liegt.

Ferner ist aus den BMW Fahrzeugen der ab 9/1982 vertriebenen 3er-Baureihe eine Halterung bekannt, die in einer muldenförmigen, zur Aufnahme des Reserverades dienenden Vertiefung im Boden des Gepäckraums vorgesehen ist. Dabei steht vom Boden der Vertiefung ein Schraubenbolzen unter Durchdringung der mittigen Durchgangsöffnung der Reserveradfelge lotrecht ab, wobei das Reserverad durch eine auf den Schraubenbolzen aufgeschraubte Flügelmutter unter Zwischenlage einer Druckscheibe fixiert wird. Schließlich sitzt auf dem freien Endabschnitt des Schraubenbolzens eine Tragscheibe auf, deren Stirnseite bündig zum Gepäckraumboden verläuft und dabei eine auf diesem aufliegende Einlegematte o. dgl. im Zentrum der kreisrunden muldenförmigen Vertiefung trägt ; die Tragscheibe hat hierfür einen Fortsatz mit einer Sacklochbohrung, über deren Grund sie auf der Stirnseite des Schraubenbolzens aufliegt. Da somit zur Befestigung des Reserverades und für die Abstützung der Einlegematte mehrere Einzelteile erforderlich sind, die jeweils für sich gefertigt und einzeln montiert werden müssen, entstehen vergleichsweise hohe Fertigungs- und Montagekosten. Ferner können die einzelnen Teile aufgrund ihrer konstruktiven Gestaltung nicht in rationeller Weise durch einen Handhabungsautomaten montiert werden.

Aufgabe der Erfindung ist es daher, bei einer Halterung der im Oberbegriff des Patentanspruchs 1 genannten Art die Tragscheibe derart anzuordnen, daß sie in rationeller und damit kostengünstiger Weise, gewünschtenfalls auch durch einen Handhabungsautomaten zusammen mit dem Schraubteil montiert werden kann.

Zur Lösung der Aufgabe sind die im kennzeichnenden Teil des Patentanspruchs 1 dargelegten Merkmale vorgesehen.

Da das Schraubteil und die Tragscheibe erfindungsgemäß über eine Solltrennstelle miteinander verbunden sind, kann das Schraubteil – neben der Vermeidung der Nachteile des Standes der Technik – vorteilhafterweise durch einen Handhabungsautomaten montiert werden. Dabei wird das Schraubteil zunächst in üblicher Weise auf den Schraubenbolzen aufgeschraubt, wobei beim Aufsitzen der Tragscheibe auf dessen Stirnseite (oder einer Auflageschulter am Schraubenbolzen) durch das weitere Aufschrauben des Schraubteils auf den Schraubenbolzen die Solltrennstelle selbsttätig durchgetrennt wird, so daß die Tragscheibe auf dem Schraubenbolzen aufsitzt. Das Schraubteil ist dabei derart gestaltet, daß es nach weiterem Aufschrauben auf den Schraubenbolzen mit einem Zentrieransatz in die Durchgangsöffnung der Felge eingreift und mit einem Radialflansch auf diesem aufliegt. Falls der erläuterte Montagevorgang von einem Handhabungsautomaten durchgeführt wird, ist lediglich darauf zu achten, daß das Anzugsmoment des Schraubteils für die Reserveradbefestigung größer ist als die aufzubringende Kraft zum Durchtrennen der Solltrennstelle, was empirisch zu ermitteln ist.

Zweckmäßigerweise besteht das Schraubteil und die Tragscheibe aus einem einzigen Montageteil, das im Kunststoff-Spritzgießverfahren gefertigt ist, wobei die zwischen der Tragscheibe und dem Schraubteil liegende Solltrennstelle durch eine umlaufende Querschnittsverringerung oder auch durch mehrere, im Winkelabstand voneinander liegende Verbindungsstege gebildet ist. Da das Montageteil aus einem einzigen Teil besteht, wird die Lagerhaltung vereinfacht und der Platzbedarf am Fließband verringert ; an diesem kann es dabei beispielsweise durch einen Vibrationswendelförderer automatisch bereitgestellt werden. Dabei kann das Montageteil durch einen Handhabungsautomaten in rationeller Weise montiert werden.

Ein Ausführungsbeispiel der Erfindung ist in der Zeichnung dargestellt und wird im folgenden erläutert.

Es zeigt :

Fig. 1 ein in einer muldenförmigen Vertiefung eines Personenkraftwagens angeordnetes Reserverad im Schnitt mit zur Aufschraubung vorgesehenem Montageteil,

Fig. 2 ein Schraubteil und eine Tragscheibe in Einbaulage,

Fig. 3 ein Montageteil im Herstellzustand.

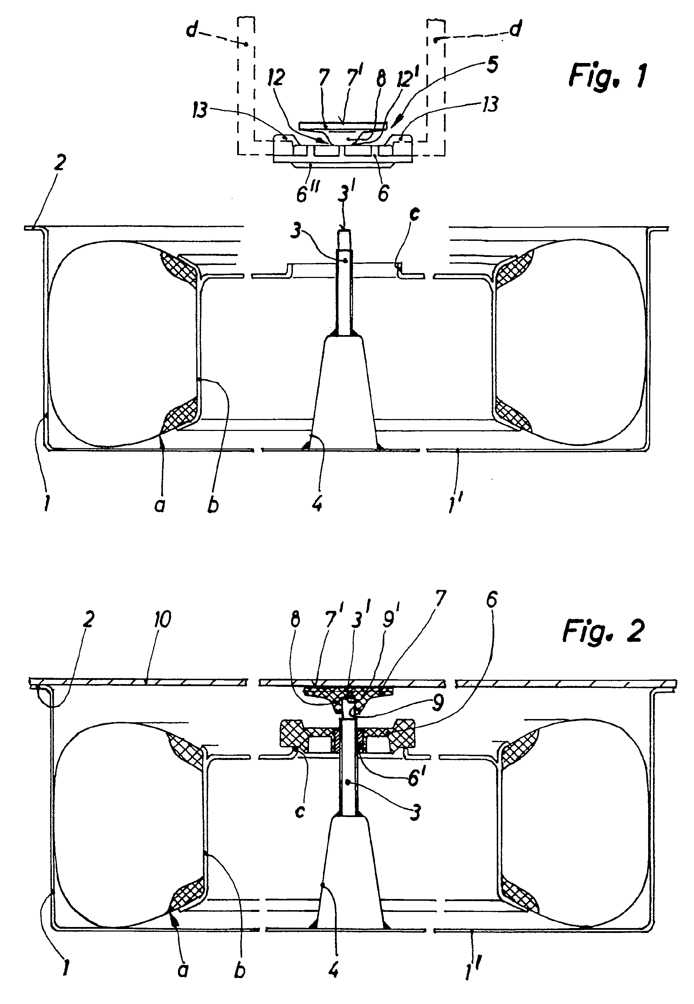

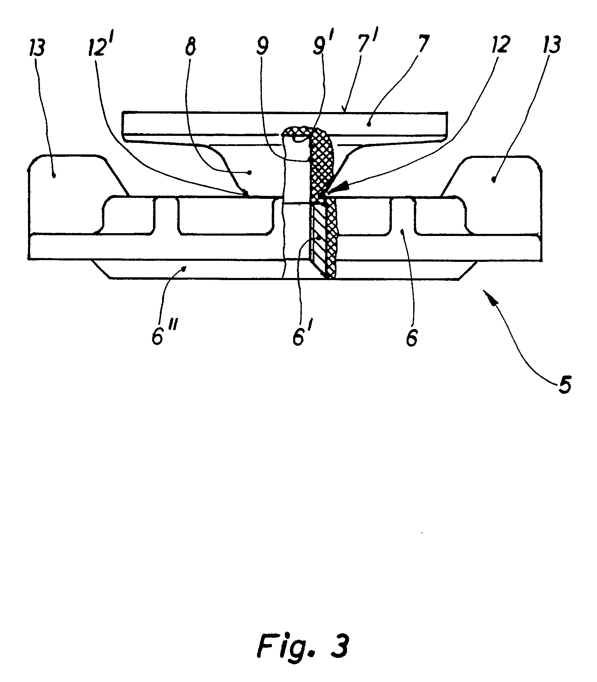

Die in den Fig. 1 und 2 dargestellte, kreisrunde muldenförmige Vertiefung 1 befindet sich unterhalb des waagrechten Gepäckraumbodens 2 eines nicht dargestellten Personenkraftwagens und dient zur Aufnahme eines Reserverades a. Dieses hat eine Felge b, deren zentrische Durchgangsöffnung c von einem lotrechten, in ihrem Zentrum liegenden Schraubenbolzen 3 durchsetzt ist, der an seinem unteren Ende an einem konischen Fortsatz 4 angeschweißt ist ; dieser ist seinerseits am Boden 1' der muldenförmigen Vertiefung 1 angeschweißt.

Zur Lagefixierung des Reserverades a dient ein scheibenförmiges, aus Kunststoff bestehendes Schraubteil 6, das auf den Schraubenbolzen 3 aufschraubbar ist und in Spannlage an der oben liegenden Stirnseite der Durchgangsöffnung c der Felge b anliegt. Beim Ausführungsbeispiel ist in das Schraubbteil 6 eine Gewinde-Messing-Buchse 6' eingespritzt ; gleichermaßen kann auch ein Innengewinde unmittelbar im Schraubteil 6 ausgebildet sein. Schließlich sitzt auf dem freien Endabschnitt des Schraubenbolzens 3 eine ebenfalls aus Kunststoff bestehende Tragscheibe 7 auf, die hierfür an ihrer Unterseite einen Fortsatz 8 mit einer nach unten offenen Sacklochbohrung 9 hat, über deren Grund 9' die Tragscheibe 7 auf der freien Stirnseite 3' des Schraubenbolzens 3 aufliegt, wobei die Tragscheibe 7 über die Sacklochbohrung 9 auf den freien Endabschnitt des Schraubenbolzens 3 lose aufgesteckt ist. Dabei verläuft die Stirnseite 7' der Tragscheibe 7 bündig zur Oberseite des Gepäckraumbodens 2, so daß eine auf diesem aufliegende, die muldenförmige Vertiefung 1 überdeckende biegsame Abdeckung 10 – beispielsweise eine Einlegematte o.dgl. – sich im Zentrum der kreisförmigen Vertiefung 1 nicht durchbiegt.

Wie in den Fig. 1 und 3 ersichtlich, ist das Schraubteil 6 und die an diesem stirnseitig angeordnete Tragscheibe 7 im Herstellzustand als ein einstückiges Montageteil 5 gestaltet, das insgesamt aus Kunststoff besteht. Dabei ist das Schraubbteil 6 mit der Tragscheibe 7 über eine zwischen deren Fortsatz 8 und der zugewandten Stirnseite des Schraubteils 6 liegende Solltrennstelle 12 verbunden. Gemäß dem vorliegenden Ausführungsbeispiel kann diese aus einer umlaufenden Querschnittsverringerung 12' bestehen. Gleichermaßen kann jedoch die Solltrennstelle 12 auch durch beispielsweise drei, in gleichgroßem Winkelabstand voneinander angeordnete Verbindungsstege gebildet sein. Durch die zwischen der Tragscheibe 7 und dem Schraubbteil 6 liegende Solltrennstelle 12 ist gewährleistet, daß beim Aufschrauben des Schraubteils 6 auf den Schraubenbolzen 3 die Tragscheibe 7 nach ihrem Aufsitzen auf dessen Stirnseite 3'selbsttätig vom Schraubteil 6 abgetrennt wird, so daß dieses bis zu seinem Festziehen an der obenliegenden Stirnseite der Felge b weitergedreht werden kann. Dabei greift ein an der Unterseite des Schraubteils 6 vorgesehener Zentrierbund 6" in die Durchgangsöffnung c der Felge b ein. Durch das erfindungsgemäß einstückig ausgebildete Montageteil 5 mit Solltrennstelle 12 kann die Montage von Schraubteil 6 und Tragscheibe 7 vorteilhafterweise durch einen Handhabungsautomaten erfolgen, dessen Greifarme d in Fig. 1 mit gestrichelten Linien dargestellt sind. Zweckmäßigerweise greifen diese an diametral gegenüberliegenden Haltefortsätzen 13 des Schraubteils 6 an. Bei dessen Aufschraubung durch einen Handhabungsautomaten auf den Schraubenbolzen 3 ist darauf zu achten, daß das am Handhabungsautomaten eingestellte Anzugsmoment für das Festziehen des Schraubteils 6 an der Felge b größer ist als die aufzubringende Kraft für das Durchtrennen der Solltrennstelle 12, was am besten empirisch ermittelt wird. Natürlich kann auch das Schraubteil 6 manuell auf den Schraubenbolzen 3 aufgeschraubt werden.

Schließlich ist es auch denkbar, ein Schraubteil 6 und eine Tragscheibe 7 jeweils als ein Einzelteil zu fertigen und dabei die Solltrennstelle 12 durch Kleben, Schweißen o.dgl. der stirnseitig aneinanderliegenden Teile zu bilden.

## Ansprüche

1. Halterung eines Reserverades an einer Wandung eines Kraftfahrzeugs, im wesentlichen bestehend aus mindestens einem fahrzeugaufbaufesten, die Felge des Reserverades durchsetzenden Schraubenbolzen, auf den ein mittelbar oder unmittelbar an der Felge festliegendes Schraubteil aufschraubbar ist, und einer auf dem freien Endabschnitt des Schraubenbolzens aufsitzenden Tragscheibe zur Auflage einer Abdeckung, dadurch gekennzeichnet, daß das Schraubteil (6) und die Tragscheibe (7) über eine Solltrennstelle (12) miteinander verbunden sind, die beim Aufschrauben des Schraubteils auf den Schraubenbolzen (3) nach Aufsitzen der Tragscheibe auf diesem durchgetrennt wird.

2. Halterung nach Anspruch 1, dadurch gekennzeichnet, daß das Schraubteil (6) und die Tragscheibe (7) als ein einstückiges, aus Kunststoff bestehendes Montageteil (5) gefertigt sind, wobei die zwischen einem Fortsatz (8) der Tragscheibe und der zugewandten Stirnseite des Schraubteils liegende Solltrennstelle (12) durch eine umlaufende Querschnittsverringerung (12') oder durch mehrere, in gleichgroßem Winkelabstand angeordnete Verbindungsstege gebildet ist.

## Claims

1. A holder for a spare wheel on a wall of a motor vehicle, consisting substantially of at least one screw bolt, fixed to the structure of the vehicle and penetrating the rim of the spare wheel, onto which screw bolt a screw part is able to be screwed which lies tightly, directly or indirectly, against the rim, and further consisting of a supporting disc, sitting on the free end section of the screw bolt, to support a covering, characterised in that the screw part (6) and the supporting disc (7) are connected with each other via a readily-separable joint (12) which is separated through on screwing the screw part onto the screw bolt (3) after the supporting disc sits on the latter.

2. A holder according to Claim 1, characterised in that the screw part (6) and the supporting disc (7) are manufactured as an assembly part (5), in one piece, consisting of plastics material, in which the readily-separable joint (12) lying between an extension (8) of the Supporting disc and the facing end face of the screw part is formed by a circular reduction in cross-section (12') or by a plurality of connecting cross-pieces arranged at angular distances of equal size.

## Revendications

1. Fixation d'une roue de secours sur une paroi d'un véhicule automobile, se composant essentiellement d'au moins un boulon fileté fixé à la carrosserie du véhicule, traversant la roue de secours, sur lequel on peut visser indirectement ou directement une pièce filetée se fixant contre la jante, et un disque-support se plaçant sur le tronçon d'extrémité libre du boulon fileté pour servir d'appui à un couvercle, caractérisée en ce que la pièce fileté (6) et le disque-support (7) sont joints l'un avec l'autre à un point de séparation obligé (12) qui est mis en évidence en vissant la pièce filetée sur le boulon fileté (3) après mis en place du disque-support sur celui-ci.

2. Fixation d'une roue de secours selon la revendication 1, caractérisée en ce que la pièce filetée (6) et le disque-support (7) sont réalisés comme une pièce de montage (5) d'une seule pièce, en matière plastique, le point de séparation obligé (12) situé entre un prolongement (8) du disque-support et la face frontale tournée vers lui de la pièce filetée étant constitué par un rétrécissement de section transversale (12') ou par plusieurs nervures de liaison placées à une même distance angulaire.

Fig. 1

Fig. 2

EP 0 291 657 B1

Fig. 3